# EUROPÄISCHE PATENTANMELDUNG

(11) **EP 0 864 452 A2**
(43) Veröffentlichungstag der Anmeldung: **16.09.1998**
(21) Anmeldenummer: 98103893.8
(22) Anmeldetag: 05.03.1998
(51) Int. Cl.: B60G 11/27, B60G 17/052

(54) **Anordnung mit einer Luftfeder und einem Zusatzvolumen**

(30) Priorität: 13.03.1997 DE 19710399
(71) Anmelder: Continental Aktiengesellschaft, 30165 Hannover (DE)
(72) Erfinder: Wode, Stefan, Dr., 30851 Langenhagen (DE)

(57) **Zusammenfassung**

Die Erfindung betrifft eine Anordnung, bestehend aus einer Luftfeder 2, einem Zusatzvolumen 4 und einer Verbindungsleitung 6, die die Luftfeder 2 und das Zusatzvolumen 4 miteinander verbindet. In der Verbindungsleitung 6 befindet sich ein durch Luftdruck zu betätigendes Ventil 12, das aus einem Zylinder 14 mit einer Kammer 16 besteht, in der ein Hohlkolben 18 axial beweglich angeordnet ist. In einer Öffnungsstellung des Hohlkolbens 18 gibt das Ventil 12 die Verbindungsleitung 6 frei, wohingegen in einer Schließstellung des Hohlkolbens 18 die Verbindungsleitung 6 gesperrt wird. Die Erfindung betrifft ebenfalls ein Ventil, das durch Luftdruck zu betätigen ist.

## Beschreibung

Die Erfindung betrifft eine Anordnung mit einer Luftfeder und einem Zusatzvolumen, das über eine Verbindungsleitung mit der Luftfeder in Verbindung steht und mit einem durch Luftdruck zu betätigenden Ventil, das in einer Schließstellung die Verbindungsleitung sperrt und in einer Öffnungsstellung die Verbindungsleitung freigibt.
Die Erfindung betrifft ferner ein Ventil, das durch Luftdruck zu betätigen ist und eine Verbindungsleitung, die zwei abgeschlossene Luftvolumina miteinander verbindet, die in einer Schließstellung des Ventils gesperrt und in einer Öffnungsstellung des Ventils freigegeben ist.

In modernen Kraftfahrzeugen werden in zunehmendem Maße Luftfedern zur Federung eingesetzt, da diese eine komfortable Federung und eine Niveau-Regulierung des Fahrzeugs ermöglichen. Die Luftfedern des Kraftfahrzeuges sind vorzugsweise über eine Verbindungsleitung mit einem Zusatzvolumen verbunden, mit dessen Hilfe die Steifigkeit der Luftfeder eingestellt werden kann. Die Verbindungsleitung weist einen großen Querschnitt auf, damit Luft zwischen der Luftfeder und dem Zusatzvolumen mit ausreichend hoher Dynamik ausgetauscht werden kann. Dadurch wird es beispielsweise möglich, dass auch bei einer kurzzeitigen Verkürzung einer Luftfeder, beispielsweise beim Überfahren eines Hindernisses, Luft von der Luftfeder in das Zusatzvolumen überführt wird, so dass die Luftfeder 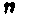 weich" einfedert. In die Verbindungsleitung ist ein Ventil eingeschaltet, das in einer Schließstellung die Verbindungsleitung sperrt und in einer Öffnungsstellung die Verbindungsleitung freigibt. Vorzugsweise wird ein durch Luftdruck zu betätigendes Ventil verwendet, da mit einem derartigen Ventil große Querschnitte in eine Verbindungsleitung einfach geschaltet werden können. Im allgemeinen Fahrbetrieb des Kraftfahrzeuges befindet sich das Ventil in der Öffnungsstellung, so dass die Luftfeder mit dem Zusatzvolumen ständig verbunden ist und 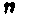 weich" einfedern kann, so dass ein hoher Federungskomfort des Kraftfahrzeuges gewährleistet ist. Es gibt aber auch Fahrsituationen, in denen nicht eine weiche, komfortbetonte Einfederung der Luftfeder, sondern vielmehr eine hohe Steifigkeit der Luftfeder gefordert ist. So sollte beispielsweise beim Durchfahren einer Kurve die Luftfeder aller Räder eine hohe Steifigkeit aufweisen, damit sich das Fahrzeug beim Durchfahren der Kurve nicht zu stark zur Seite neigt. Derartige Fahrsituationen werden beispielsweise von Sensoren erfaßt und das Ventil in der Verbindungsleitung wird angesteuert und von der Öffnungsstellung in die Schließstellung überführt, so dass die Verbindungsleitung gesperrt ist. Die Luftfeder ist dann nicht mehr mit dem Zusatzvolumen verbunden, so dass sie dementsprechend eine höhere Steifigkeit aufweist.

Ein Ende der Fahrsituation, die eine höhere Steifigkeit einer oder mehrerer Luftfedern des Kraftfahrzeuges erfordert, wird wiederum von den Sensoren erfaßt und die entsprechenden Ventile in den Verbindungsleitungen werden wiederum angesteuert, so dass die Ventile im Prinzip von der Schließstellung in die Öffnungsstellung übergehen können. Hierbei sollte trotz der Ansteuerung eines Ventils das entsprechende Ventil dann nicht in die Öffnungsstellung übergehen, wenn eine große Druckdifferenz zwischen der Luftfeder und dem Zusatzvolumen vorliegt, da es ansonsten wegen des großen Querschnitts der Verbindungsleitung zu einem spontanen Druckausgleich zwischen der Luftfeder und dem Zusatzvolumen kommt. Dies könnte beispielsweise zu einem spontanen 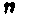 Zusammensinken" der Luftfeder führen. Wird beispielsweise von den Sensoren erfaßt, dass ein Kraftfahrzeug von einer Kurvenfahrt in eine Geradeausfahrt übergeht, so werden die Ventile der Räder angesteuert, so dass sie im Prinzip von der Schließstellung in die Öffnungsstellung übergehen können. Liegt in diesem Moment aufgrund einer noch vorhandenen Fahrzeugneigung noch ein hoher Luftdruck in den entsprechenden Luftfedern vor, so würde ein spontanes Öffnen der Ventile zu einem spontanen Druckausgleich zwischen der Luftfeder und dem Zusatzvolumen führen, so dass der Luftdruck in der Luftfeder dementsprechend absinkt und sich das Fahrzeug stark zur Seite neigt. Aus den genannten Gründen sollte sich das Ventil erst dann öffnen, wenn zwischen dem Luftdruck in der Luftfeder und dem Luftdruck in dem Zusatzvolumen eine geringe Druckdifferenz vorliegt. Die obigen Ausführungen machen deutlich, dass dem Ventil in der Verbindungleitung eine hohe Bedeutung zukommt.

Aus der DE-OS 1 914 696 ist eine Höhenregelvorrichtung für eine Fahrgestell eines Schienenfahrzeuges bekannt. Der Fahrzeugkasten des Schienenfahrzeuges ist über eine Luftfeder, die mit einem Zusatzvolumen über eine Verbindungsleitung in Verbindung steht, gegenüber dem Fahrgestell abgefedert. In der Verbindungsleitung ist ein Ventil angeordnet, das eine Öffnungsstellung und eine Schließstellung aufweist. Im allgemeinen Fahrbetrieb des Schienenfahrzeuges befindet sich das Ventil in der Schließstellung und sperrt somit die Verbindungsleitung zwischen dem Zusatzvolumen und der Luftfeder ab. Durchfährt das Schienenfahrzeug hingegen eine Kurve, so kommt es an der kurvenäußeren Seite des Schienenfahrzeuges zu einer Neigung des Schienenfahrzeuges und infolgedessen zu einer Verkürzung der Luftfeder. Durch die Neigung des Schienenfahrzeuges wird das in der Verbindungsleitung befindliche Ventil angesteuert und geht zwangsläufig von der Schließstellung in die Öffnungsstellung über, so dass das Zusatzvolumen nunmehr mit der Luftfeder verbunden ist und Luft von dem Zusatzvolumen in die Luftfeder eindringen kann. Demzufolge steigt der Luftdruck in der Luftfeder an und das Schienenfahrzeug wird auf der kurvenäußeren Seite angehoben, so dass die Neigung des Schienenfahrzeuges ausgeglichen wird.

Das aus der DE-OS 1 914 696 bekannte Ventil weist einen komplizierten Aufbau auf und geht darüber hinaus auch dann zwangsläufig von der Schließstellung in die Öffnungsstellung über, wenn zwischen dem Luftdruck in dem Zusatzvolumen und dem Luftdruck in der Luftfeder eine große Druckdifferenz vorliegt. Aus den genannten Gründen ist die aus der DE-OS 1 914 696 bekannte Anordnung mit einer Luftfeder und einem Zusatzvolumen und insbesondere das aus dieser Anordnung bekannte Ventil zum Einsatz in moderneren Kraftfahrzeugen nicht geeignet.

Der Erfindung liegt die Aufgabe zugrunde, eine Anordnung der eingangs genannten Art zu schaffen, bei der das durch Luftdruck zu betätigende Ventil einfach ausgebildet ist. Der Erfindung liegt ferner die Aufgabe zugrunde, ein durch Luftdruck zu betätigendes Ventil zu schaffen, das einen einfachen Aufbau aufweist.

Gemäß den kennzeichnenden Merkmalen des Anspruchs 1 wird die Aufgabe dadurch gelöst, dass
- die Verbindungsleitung zwei Teile enthält, die beide in einer Kammer eines Zylinders münden und dass
- in der Kammer des Zylinders ein Kolben axial beweglich angeordnet ist, der die Kammer in zwei volumenveränderliche Teilkammern unterteilt und der in der Öffnungsstellung beide Mündungsöffnungen der Verbindungsleitung freigibt und in der Schließstellung mindestens eine der Mündungsöffnungen der Verbindungsleitung durch seine Mantelfläche sperrt und dass
- einer der volumenveränderlichen Teilkammern über einen Anschluß Steuerluft zuführbar ist, mit der die Stirnfläche des Kolbens beaufschlagbar ist.
Die Aufgabe wird ebenfalls durch den nebengeordneten Anspruch 5 gelöst. Vorzugsweise wird als Kolben ein Hohlkolben verwendet, da sich dieser einfacher von der Öffnungsstellung in die Schließstellung und umgekehrt überführen läßt.

Die mit der Erfindung erzielten Vorteile sind insbesondere darin zu sehen, dass das in die Verbindungsleitung eingebrachte Ventil einen extrem einfachen Aufbau aufweist. Dennoch ist das Ventil so ausgebildet, dass es bei großen Druckdifferenzen zwischen den Luftdrücken der Luft in der Luftfeder und der Luft in dem Zusatzvolumen nicht schaltbar ist, da es in diesem Falle zu einer hohen Reibung der Mantelfläche des Kolbens an der Kammerwand des Zylinders kommt und somit das Ventil bzw. der Kolben nicht von der Schließstellung in die Öffnungsstellung überführbar ist. Ein weiterer Vorteil der Erfindung ist darin zu sehen, dass auch Verbindungsleitungen mit einem sehr großen Querschnitt mit Hilfe des erfindungsgemäßen Ventils gesperrt werden können, da die Leistung, die zum Freischalten der Verbindungsleitung aufgebracht werden muß, selbst in diesem Fall gering ist.

Gemäß einem Ausführungsbeispiel der Erfindung sind die den Teilkammern zugewandten Druckflächen des Kolbens gleichgroß, was z. B. dadurch erreicht werden kann, dass die Stirnfläche eines Hohlkolbens (druckwirksame Fläche für eine Teilkammer) genauso groß ist, wie diejenige Fläche, die von dem Kolbenmantel umfasst wird (druckwirksame Fläche für die zweite Teilkammer). Bei diesem Ausführungsbeispiel kann der Kolben nur dann in die Schließstellung übergehen, wenn der Luftdruck in der Teilkammer, der die Steuerluft zugeführt wird, größer ist als der Systemluftdruck. Um dies zu erreichen, wird der Teilkammer Druckluft von einem Kompressor oder einem Druckspeicher zugeführt.

Gemäß einem alternativen Ausführungsbeispiel der Erfindung ist die druckwirksame Fläche des Kolbens, die der Teilkammer zugewandt ist, an der die Steuerluft anliegt, größer als die druckwirksame Fläche des Kolbens, die der anderen Teilkammer zugewandt ist. In diesem Fall kann der Kolben in seine Schließstellung überführt bzw. in dieser gehalten werden, indem über den Anschluß der Teilkammer als Steuerluft die 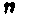 Systemluft" angelegt wird.

Weitere Vorteile und ein Ausführungsbeispiel der Erfindung werden im Zusammenhang mit den nachstehenden Figuren erläutert, darin zeigt:
- Fig. 1: Eine Anordnung mit einer Luftfeder und einem Zusatzvolumen im Querschnitt
- Fig. 2: Eine Anordnung mit einer Luftfeder und einem Zusatzvolumen im Querschnitt
- Fig. 3: Eine Anordnung mit einer Luftfeder und einem Zusatzvolumen im Querschnitt.

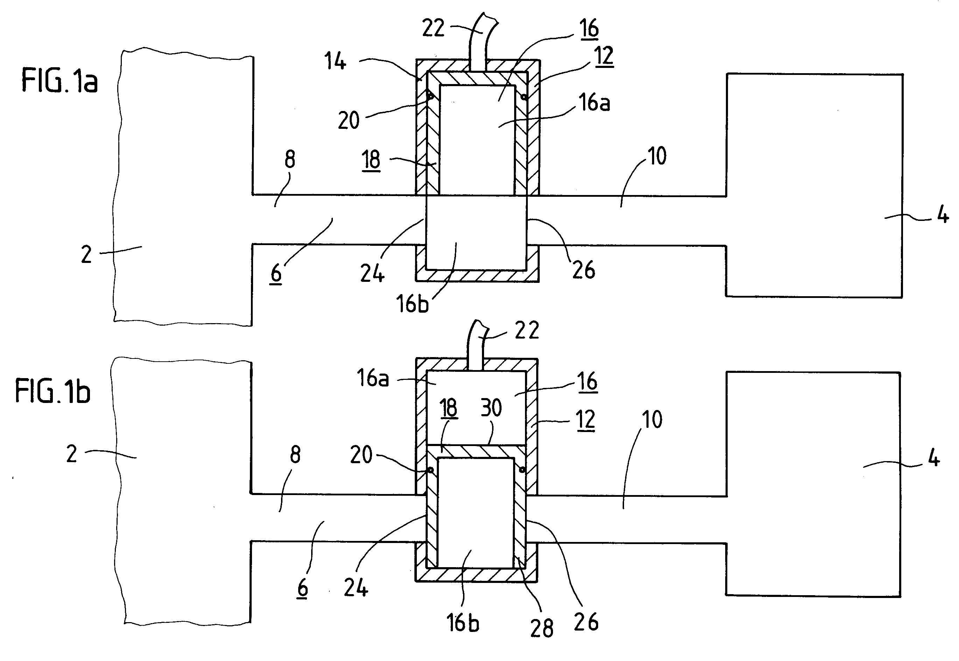

Fig. 1 zeigt in schematischer Darstellung eine Anordnung mit einer Luftfeder 2 und einem Zusatzvolumen 4, die über eine Verbindungsleitung 6 in Verbindung stehen, im Querschnitt, wobei nur die für die nachfolgenden Erläuterungen wesentlichen Bestandteile der Anordnung gezeigt sind Die Verbindungsleitung 6 ist von einem Ventil 12 zweigeteilt und ein erster Teil 8 und ein zweiter Teil 10 der Verbindungsleitung 6 münden jeweils in einer Kammer 16 des Zylinders 14 des Ventils 12. In der Kammer 16 des Zylinders 14 ist ein Hohlkolben 18 axial beweglich angeordnet. Der Hohlkolben 18 verfügt über einen O-Ring 20, der eine Dichtungsfunktion übernimmt und die Kammer 16 des Zylinders 14 in eine Teilkammer 16a oberhalb des Hohlkolbens 18 und in eine Teilkammer 16b unterhalb des Hohlkolbens 18 unterteilt, die luftdicht gegeneinander abgeschlossen sind. An das Ventil 12 ist eine Steuerleitung 22 angeschlossen, über die der Teilkammer 16a Steuerluft zugeführt werden kann.

In der Fig. 1a befindet sich das Ventil in seiner Öffnungsstellung, die dadurch erreicht wird, dass der Hohlkolben 18 derartig hochgeschoben ist, dass er die beiden Mündungsöffnungen 24 und 26 nicht verschließt. Infolgedessen kann durch die Verbindungsleitung 6 von der Luftfeder 2 zu dem Zusatzvolumen 4 bzw. in umgekehrter Richtung Luft strömen. Die in der Fig. 1a gezeigte Öffnungsstellung des Ventils 12 wird dadurch erreicht, dass die obere Teilkammer 16a über die Steuerleitung 22 mit der Atmosphäre verbunden wird, so dass dort Atmosphärenluftdruck herrscht. Da der Luftdruck in der Anordnung, gebildet aus der Luftfeder 2, der Verbindungsleitung 6 und dem Zusatzvolumen 4 größer ist als der Atmosphärenluftdruck, gilt dies auch für den Luftdruck in der Teilkammer 16b, so dass der Hohlkolben 18 infolge des Druckgradienten die gezeigte Position einnimmt.

Fig. 1b zeigt das Ventil 12 in seiner Schließstellung, die sich dadurch auszeichnet, dass der Hohlkolben 18 mit seiner Mantelfläche auf den Boden des Zylinders 14 aufliegt und mit seiner Mantelfläche 28 die Mündungsöffnungen 24 und 26 verschließt. Das Ventil 12 wird von der Öffnungsstellung (s. Fig. 1a) in die Schließstellung dadurch überführt, dass die Steuerleitung 22 mit einem Kompressor verbunden wird, mit Hilfe dessen der Teilkammer 16a Druckluft zugeführt wird. Der Luftdruck wird in der Teilkammer 16a so eingestellt, dass er größer ist als der Luftdruck in der Anordnung (im folgenden Systemluftdruck). Infolgedessen ist der Luftdruck in der Teilkammer 16a größer als in der Teilkammer 16b. Dies gilt auch dann, wenn in Folge von Undichtigkeit Luft aus der Luftfeder 2 bzw. dem Zusatzvolumen 4 unter den Hohlkolben 16 dringt. Da die druckwirksame Fläche sowohl der Teilkammer 16a als auch der Teilkammer 16b der Stirnfläche 30 des Hohlkolbens 18 entspricht, entsteht in der Summe eine in Richtung des Zylinderbodens des Zylinders 14 gerichtete Kraft, so dass der Hohlkolben 18 die in der Figur 1b gezeigte Position beibehält.

Ausgehend von der Figur 1b wird nun erläutert, was geschieht, wenn die Teilkammer 16a über die Steuerleitung 22 mit der Atmosphäre verbunden wird. Hierbei wird zunächst davon ausgegangen, dass der Luftdruck in der Luftfeder 2 ungefähr genauso groß ist wie in dem Zusatzvolumen 4, so dass sich in der Anordnung keine allzu großen Druckgradienten ausbilden können. In diesem Fall wird der Hohlkolben 18 durch die unter dem Hohlkolben befindliche Luft nach oben verschoben und nimmt nach einiger Zeit die in der Figur 1a gezeigte Position ein. Ist jedoch der Luftdruck beispielsweise in der Luftfeder 2 wesentlich größer als in dem Zusatzvolumen 4, so bildet sich in der Anordnung ein großer Druckgradient aus, durch den der Hohlkolben 18 gegen die rechte Seitenwand des Zylinders 14 gedrückt wird. Infolge des Druckes entsteht zwischen einem Teil der Mantelfläche 28 des Hohlkolbens 18 und einem Teil der Seitenwand des Zylinders 14 eine hohe Reibungskraft, die in ihrer Richtung der Kraft, die durch den Druckgradienten in der Kammer 16 entsteht, entgegengesetzt ist und deshalb den Hohlkolben 18 daran hindert, von der Schließstellung (s. Fig. 1b) in die Öffnungsstellung (s. Fig. 1a) überzugehen. Somit verbleibt bei einem großen Druckgradienten der Hohlkolben 18 in seiner Schließstellung, obwohl die Teilkammer 16a über die Steuerleitung 22 mit der Atmosphäre verbunden ist. Der Hohlkolben 18 geht erst dann in die Öffnungsstellung über, wenn sich die Drücke in der Luftfeder 2 und dem Zusatzvolumen 4 einander angleichen.

Gemäß einem weiteren Ausführungsbeispiel der Erfindung ist der Kolben 18 als geschlossener Kolben ausgebildet und weist in diesem Fall der Stirnfläche 30 gegenüberliegend eine weitere Stirnfläche auf.

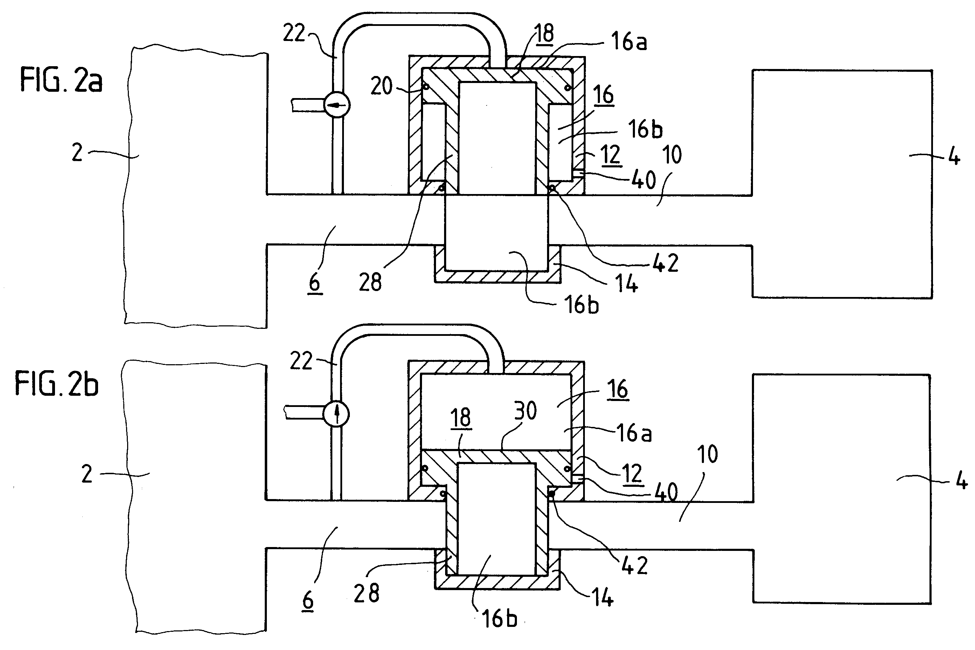

Fig. 2 zeigt eine Anordnung, die mit Ausnahme des Ventils 12 genauso aufgebaut ist wie die in der Fig. 1 gezeigte Anordnung. Die Stirnfläche 30 des Hohlkolbens 18 ist bei diesem Ausführungsbeispiel so ausgebildet, dass sie über die Mantelfläche 28 des Hohlkolbens 18 hinausragt, so dass die Stirnfläche 30 größer ist als die von der Mantelfläche 28 umfaßte Fläche. Der Hohlkolben 18 ist wiederum axial beweglich in der Kammer 16 eines Zylinders 14 angeordnet und teilt die Kammer 16 in zwei volumenveränderliche Teilkammern, wobei die Teilkammer 16a wiederum oberhalb des Hohlkolbens 18 liegt. Die Teilkammer 16b besteht bei diesem Ausführungsbeispiel aus einem erstenTeil unterhalb des Hohlkolbens 18 und in der Öffnungsstellung des Hohlkolbens 18 (s. Fig. 2a) aus einem zweiten Teil, der außerhalb der Mantelfläche 28 und unterhalb der Stirnfläche 30 des Hohlkolbens 18 liegt.

Der zweite Teil der Teilkammer 16b ist über eine Bohrung 40 mit der Atmosphäre verbunden. Ferner ist der zweite Teil der Teilkammer 16b von dem ersten Teil der Teilkammer 16b durch den O-Ring 42 luftdicht abgetrennt. Die der Teilkammer 16a zugewandte wirksame Druckfläche entspricht der Stirnfläche 30 und die der Teilkammer 16b zugewandte bezüglich des Systemluftdrucks wirksame Druckfläche entspricht der von der Mantelfläche 28 umfaßten Fläche. Dies bedeutet, dass der Hohlkolben 18 von der Öffnungsstellung (s. Fig. 2a) in die Schließstellung (s. Fig. 2b) durch Anlegen des Systemluftdrucks über die Steuerleitung 22 an die Teilkammer 16a überführt werden kann. In diesem Fall ist nämlich der Luftdruck in der Teilkammer 16a genauso groß wie der Luftdruck in dem ersten Teil der Teilkammer 16b und der Hohlkolben 18 wird aufgrund der größeren druckwirksamen Fläche, die der Teilkammer 16a zugeordnet ist (Stirnfläche 30) nach unten gedrückt. Eine Rückführung des Hohlkolbens 18 von der Schließstellung in die Öffnungsstellung findet auch hier wiederum dadurch statt, dass die Teilkammer 16a über die Steuerleitung 22 mit der Atmosphäre verbunden wird. Auch das in der Fig. 2 gezeigte Ventil 12 geht aus den Gründen, wie sie bereits im Zusammenhang mit der Fig. 1 erläutert worden sind, nur dann von der Schließstellung in die Öffnungsstellung über, wenn der Druckgradient innerhalb der Anordnung nicht zu groß ist.

Auch bei dem Ausführungsbeispiel gemäß Figur 2 kann der Kolben 18 als geschlossener Kolben ausgebildet sein und weist in diesem Fall eine der Stirnfläche 30 gegenüberliegende weitere Stirnfläche auf.

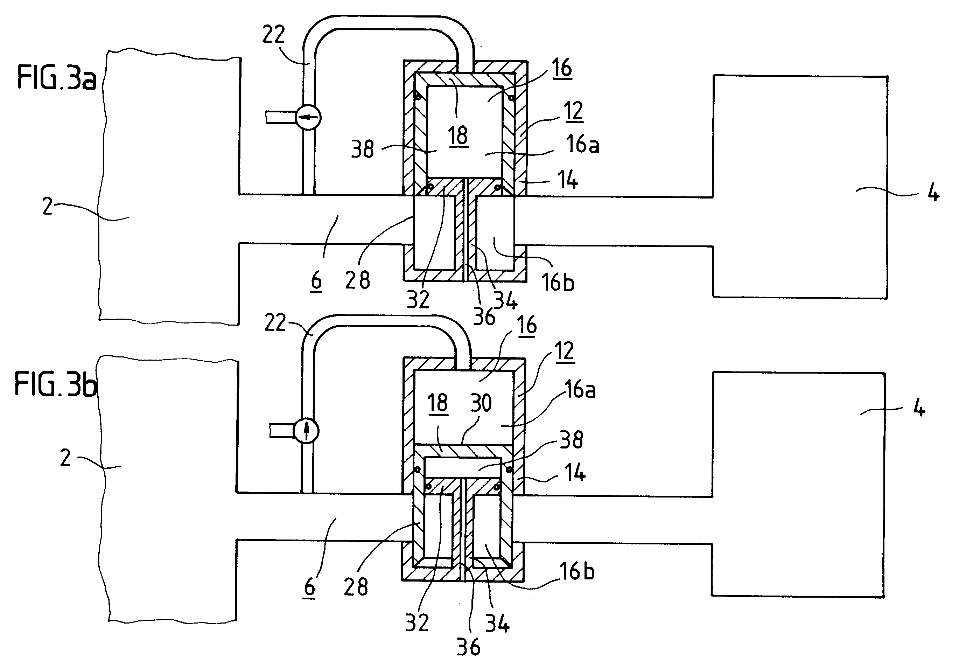

Fig. 3 zeigt eine weitere Anordnung, die mit Ausnahme des Ventils 12 genauso aufgebaut ist wie die in der Fig. 1 gezeigte Anordnung. Das Ventil 12 besteht aus einem Zylinder 14, in dessen Kammer 16 ein Hohlkolben 18 axial beweglich ist, wobei der Hohlkolben 18 an sich genauso ausgebildet ist, wie der in der Fig. 1 gezeigte Hohlkolben 18. In den Hohlkolben 18 ragt jedoch ein weiterer Kolben 32 hinein, auf dem der Hohlkolben 18 geführt ist. Der Kolben 32 ist über eine Stange 34 fest mit dem Boden des Zylinders 14 verbunden. Durch die Stange 34 ist ein Kanal 36 geführt, der die volumenveränderliche Kammer 38, die von dem Hohlkolben 18 und dem Kolben 32 eingeschlossen wird, mit der Atmosphäre verbindet, so dass in dieser Kammer 38 ständig Atmosphärenluftdruck herrscht. Die Öffnungsstellung des Ventils 12 (s. Fig. 3a) wird dadurch erreicht, dass die Teilkammer 16a über die Steuerleitung 22 mit der Atmosphäre verbunden wird. In diesem Fall herrscht also in der Teilkammer 16a Atmosphärenluftdruck und in der Teilkammer 16b der Systemluftdruck. Die druckwirksame Fläche in beiden Teilkammern 16a und 16b ist die Stirnfläche der Mantelfläche 28 des Hohlkolbens 18, da sich die anderen druckwirksamen Flächen aufgrund dessen, dass auf sie der Atmosphärenluftdruck wirkt und sie gleichgroß sind, kompensieren. Da der von der Teilkammer 16b auf die Stirnfläche der Mantelfläche 28 des Hohlkolbens 18 wirkende Luftdruck größer ist (Systemluftdruck) als der von der Teilkammer 16a auf die gleiche Fläche wirkende Luftdruck (Atmosphärenluftdruck), wird der Hohlkolben 18 in der in der Fig. 3a gezeigten Position gehalten.

Das Ventil 12 wird von seiner Öffnungsstellung (s. Fig. 3a) in seine Schließstellung (s. Fig. 3b) dadurch übergeführt, dass die Teilkammer 16a über die Steuerleitung 22 mit dem Systemluftdruck verbunden wird. In der Teilkammer 16a ist die druckwirksame Fläche für den Systemluftdruck die gesamte Stirnfläche 30 des Hohlkolbens 18, wohingegen in der Teilkammer 16b die druckwirksame Fläche für den Systemluftdruck lediglich die Stirnfläche der Mantelfläche 28 des Hohlkolbens 18 ist. Infolgedessen ist die der Teilkammer 16a zugewandte druckwirksame Fläche wesentlich größer als die der Teilkammer 16b für den gleichen Luftdruck zugeordnete druckwirksame Fläche, so dass der Hohlkolben 18 von der Öffnungsstellung in die Schließstellung gedrückt wird. Eine Rückführung des Hohlkolbens 18 von der Schließstellung in die Öffnungsstellung ist auch bei diesem Ausführungsbeispiel nur dann möglich, wenn in der Anordnung keine zu großen Druckgradienten herrschen (s. dazu auch Figurenbeschreibung zu Figur 1).

### Bezugszeichenliste

- 2: Luftfeder
- 4: Zusatzvolumen
- 6: Verbindungsleitung
- 8: erster Teil der Verbindungsleitung
- 10: zweiter Teil der Verbindungsleitung
- 12: Ventil
- 14: Zylinder
- 16: Kammer des Zylinders
- 16a: Teilkammer der Kammer 16
- 16b: Teilkammer der Kammer 16
- 18: Hohlkolben
- 20: O-Ring
- 22: Steuerleitung
- 24,26: Mündungsöffnungen
- 28: Mantelfläche des Hohlkolbens 18
- 30: Stirnfläche des Hohlkolbens 18
- 32: Kolben
- 34: Stange
- 36: Kanal
- 38: volumenveränderliche Kammer
- 40: Bohrung
- 42: O-Ring

## Patentansprüche

1. Anordnung mit einer Luftfeder (2) und einem Zusatzvolumen (4), das über eine Verbindungsleitung (6) mit der Luftfeder (2) in Verbindung steht und mit einem durch Luftdruck zu betätigenden Ventil (12), das in einer Schließstellung die Verbindungsleitung (6) sperrt und in einer Öffnungsstellung die Verbindungsleitung (6) freigibt,
**dadurch gekennzeichnet,** dass
- die Verbindungsleitung (6) zwei Teile (8), (10) enthält, die beide in einer Kammer (16) eines Zylinders (14) münden und dass
- in der Kammer (16) des Zylinders (14) ein Kolben (18) axial beweglich angeordnet ist, der die Kammer (16) in zwei volumenveränderliche Teilkammern (16a) und (16b) unterteilt und der in der Öffnungsstellung beide Mündungsöffnungen (24), (26) der Verbindungsleitung (6) freigibt und in der Schließstellung mindestens eine der Mündungsöffnungen (24), (26) der Verbindungleitung (6) durch seine Mantelfläche (28) sperrt und dass
- einer der volumenveränderlichen Teilkammern (16a, 16b) über einen Anschluß (22) Steuerluft zuführbar ist, mit der der Kolben (18) beaufschlagbar ist.

2. Anordnung mit einer Luftfeder (2) und einem Zusatzvolumen (4) nach Anspruch 1, dadurch gekennzeichnet, dass der Kolben (18) als Hohlkolben (18) ausgebildet ist.

3. Anordnung mit einer Luftfeder (2) und einem Zusatzvolumen (4) nach einem der Ansprüche 1 bis 2, dadurch gekennzeichnet, dass die druckwirksamen Flächen des Kolbens (18), die den Teilkammern (16a) und (16b) zugewandt sind, gleichgroß sind.

4. Anordnung mit einer Luftfeder (2) und einem Zusatzvolumen (4) nach einem der Ansprüche 1 bis 3, dadurch gekennzeichnet, dass die durckwirksame Fläche des Kolbens (18), die der Teilkammer (16a) zugewandt ist, an der die Steuerluft anliegt, größer ist als die druckwirksame Fläche des Hohlkolbens (18), die der anderen Teilkammer (16b) zugewandt ist.

5. Anordnung mit einer Luftfeder (2) und einem Zusatzvolumen (4) nach Anspruch 3, dadurch gekennzeichnet, dass der Kolben (18) als Hohlkolben (18) ausgebildet ist, der über einen weiteren in den Hohlkolben hineinragenden Kolben (32) geführt ist, der mit dem Zylinder (14) fest verbunden ist, so dass der Hohlkolben (18) und der weitere Kolben (32) eine volumenveränderliche Kammer (38) einschließen, die über einen Kanal (36) mit der Atmosphäre verbunden ist.

6. Ventil (5), das durch Luftdruck zu betätigen ist und eine Verbindungleitung (6), die zwei ab geschlossene Luftvolumina (2), (4) miteinander verbindet, in einer Schließstellung sperrt und in einer Öffnungsstellung freigibt, dadurch gekennzeichnet, dass das Ventil (12) aus einem Zylinder (14) besteht, in dessen Kammer (16) beide Teile (8), (10) einer aus zwei Teilen (8), (10) bestehenden Verbindungleitung (6) münden und dass
- in der Kammer (16) des Zylinders (14) ein Kolben (18) axial beweglich angeordnet ist, der die Kammer (16) in zwei volumenveränderliche Teilkammern (16a) und (16b) unterteilt und der in der Öffnungsstellung beide Mündungsöffnungen (24), (26) der Verbindungsleitung (6) freigibt und in der Schließstellung mindestens eine der Mündungsöffnungen (24), (26) der Verbindungsleitung durch seine Mantelfläche (28) sperrt und dass
- einer der volumenveränderlichen Teilkammern (16a, 16b) über einen Anschluß (22) Steuerluft zuführbar ist, mit der der Kolben (18) beaufschlagbar ist.

7. Ventil nach Anspruch 6, dadurch gekennzeichnet, dass der Kolben (18) als Hohlkolben (18) ausgebildet ist.

8. Ventil nach einem der Ansprüche 6 bis 7, dadurch gekennzeichnet, dass die druckwirksamen Flächen des Kolbens (18), die den Teilkammern (16a) und (16b) zugewandt sind, gleichgroß sind.

9. Ventil nach einem der Ansprüche 6 bis 7, dadurch gekennzeichnet, dass die druckwirksame Fläche des Kolbens (18), die der Teilkammer (16a) zugewandt ist, an der die Steuerluft anliegt, größer ist als die druckwirksame Fläche des Kolbens (18), die der anderen Teilkammer (16b) zugewandt ist.

10. Ventil nach Anspruch 9, dadurch gekennzeichnet, dass der Kolben (18) als Hohlkolben (18) ausgebildet ist, der über einen weiteren in den Hohlkolben (18) hineinragenden Kolben (32) geführt ist, der mit dem Zylinder (14) fest verbunden ist, so dass der Hohlkolben (18) und der weitere Kolben (32) eine volumenveränderliche Kammer (38) einschließen, die über einen Kanal (36) mit der Atmosphäre verbunden ist.
